# EUROPEAN PATENT SPECIFICATION

(11) **EP 0 454 378 B1**
(45) Date of publication and mention of the grant of the patent: **17.07.1996**
(21) Application number: 91303526.7
(22) Date of filing: 19.04.1991
(51) Int. Cl.: C08L 23/02, C08K 5/00

(54) **Stabilized polyolefin composition**
Stabilisierte Polyolefin-Zusammensetzung
Composition stabilisée de polyoléfine

(30) Priority: 25.04.1990 JP 111373/90
(43) Date of publication of application: 30.10.1991
(73) Proprietor: SUMITOMO CHEMICAL COMPANY, LIMITED, Osaka (JP)
(72) Inventor: Ishii, Tamaki, Suita-shi, Osaka-fu (JP); Yachigo, Shinichi, Toyonaka-shi, Osaka-fu (JP)
(74) Representative: Geering, Keith Edwin

(56) References cited:
- EP-A- 0 341 925
- US-A- 4 666 959

## Description

The present invention relates to a stabilized polyolefin composition. More precisely, it relates to a polyolefin composition which is not only stable against heat, oxidation and light but also against discoloration caused by combustion gas and nitrogen oxide gas (hereinafter referred to as NOx gas).

Polyolefin resins such as polyethylene and polypropylene are much used as materials for shaped articles such as fibers, films, and sheets, because of excellent physical, chemical and electrical properties. However, such polyolefin resins have the problem that they deteriorate under the action of heat, oxygen and light so that mechanical properties are thereby lowered.

To prevent such deterioration, various stabilizers have heretofore been used. For instance, it is known to use various phenolic compounds, such as
2,6-di-t-butyl-4-methylphenol,
1,3,5-tris(3,5-di-t-butyl-4-hydroxybenzyl) isocyanurate, and
tetrakis[3-(3,5-di-t-butyl-4-hydroxyphenyl)propionyloxymethyl]methane
for preventing deterioration of polyolefin resins by heat and oxidation. In addition, to further improve the anti-oxidant property of such phenolic compounds, it is also known to use, together with them, sulfur-containing compounds such as
dilauryl thiodipropionate;
dimyristyl thiodipropionate, and
pentaerythritol tetrakis(3-dodecylthiopropionate).
On the other hand, to prevent deterioration of the resins by light, it is known to use various light-resisting agents, for example, benzophenone compounds, benzotriazole compounds, nickel-chelate compounds and hindered amine compounds, singly or in combinationsof two or more of them. Further, various proposals for combining such known stabilizers have also been made.

However, although the polyolefin compositions which have heretofore been proposed could give favorable results which would be satisfactory in some degree with respect to stability against heat, oxidation and light, they still have some problems where the shaped articles such as fibers and films are exposed to severe conditions of production and use. Accordingly they can not be said to be always sufficient and satisfactory in practical use.

For instance, taking fibers as one example of shaped article, the conditions for producing and working them are severer than for other thicker articles, and they must firstly be resistant to high temperature in the production step. In the drying step after fiber formation, a city gas or kerosene is often used as a heat source. As the fibers would easily be discolored by the combustion gas from the heat source, they need also to be made resistant to such discoloration. Further, even after the fibers have been made into fibrous products, the products are also exposed to exhaust gas, such as combustion gas from car fuel outdoors and from oil stoves in indoors; since the products are easily discolored by NOx gas in exhaust gas, they also need to be made resistant to such discoloration.

Polyolefin compositions heretofore proposed cannot be said to be sufficiently stable against discoloration caused by combustion gas and NOx gas, though they may be stable at least against heat, oxidation and light. Therefore, it has been strongly desired to develop stabilizer systems which are effective for stabilizing polyolefin compositions not only against heat, oxidation and light but also against discoloration by combustion gas and NOx gas. We have found that combination of particular hindered phenolic compound and particular hindered piperidine compound provides such a system for polyolefin composition in the form of fibre or film.

The present invention provides a polyolefin composition in the form of fibre or film comprising polyolefin and the following components:
(A) hindered phenolic compound represented by the following formula (I): 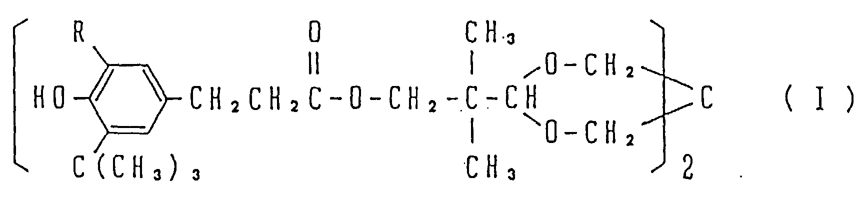 wherein R is a hydrogen atom or an alkyl of 1 to 3 carbon atoms; and
(B) hindered piperidine compound represented by the following formula (II): 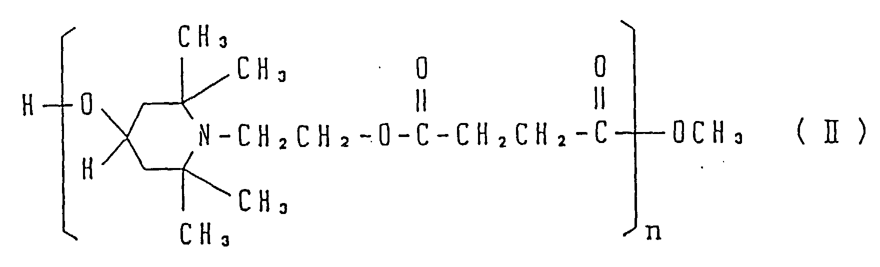 wherein n is 2 to 20.

EP-A-341925 discloses use of a particular compound (I) and a particular compound (II) as stabilizer in a polyolefin composition which contains inorganic filler and cannot be formed into film or fibre. US-A-4666959 discloses use of compound (II) to improve stability against high energy radiation.

The present invention also provides a method for producing a polyolefin formed product in the form of fibre or film by blending polyolefin with hindered phenolic compound of the above formula (I) and hindered piperidine compound of the above formula (II), and forming the blend. The blend may in addition optionally contain organic phosporous antioxidant.

Polyolefins for use in the present invention include homopolymers of α-olefins such as ethylene, propylene, butene-1, isobutene, 3-methylbutene-1, hexene-1 and 4-methylpentene-1, and random or block copolymers to be obtained from α-olefins of two or more different kinds. More precisely, they include polyethylene, polypropylene, polybutene-1, polyisobutene, poly-3-methylbutene-1, polyhexene-1, poly-4-methylpentene-1, ethylene/propylene copolymer, ethylene/butene-1 copolymer, ethylene/4-methylpentene-1 copolymer, propylene/butene-1 copolymer, propylene /4-methylpentene-1 copolymer, and ethylene/propylene/butene-1 copolymer. Above all, especially preferred is polypropylene.

In accordance with the present invention, hindered phenolic compound of the above formula (I) and hindered piperidine compound of the above formula (II) are incorporated into such a polyolefin. In the hindered phenolic compounds of the above formula (I), R is a hydrogen atom or an alkyl of 1 to 3 carbon atoms. Examples of the alkyl group are methyl, ethyl, n-propyl and isopropyl. R is preferably methyl, from the viewpoint of stability against heat and oxidation. One example of the hindered phenolic compounds (I) is 3,9-bis[2-{3-(3-t-butyl-4-hydroxy-5-methylphenyl)propionyloxy}-1,1-dimethylethyl]-2,4,8,10-tetraoxaspiro[5.5]undecane, supplied by Sumitomo Chemical Co., Ltd. The hindered piperidine compounds of the above formula (II) are described, for example, in US-A-4,234,707. As one example thereof, a polycondensate of dimethyl succinate with 1-(2-hydroxyethyl)-4-hydroxy-2,2,6,6-tetramethylpiperidine is known as a commercial product of Ciba-Geigy Co.

In the present invention, the amounts of hindered phenolic compound (I) of hindered piperidine compound (II) to be used are each preferably 0.01 to 1 part by weight, most preferably 0.02 to 0.5 part by weight, per 100 parts by weight of the polyolefin to be stabilized therewith. If each amount is less than 0.01 part by weight, the intended effect may not be attained sufficiently; if it is more than 1 part by weight, any corresponding elevated effect may be outweighed by increased cost and so be uneconomical.

Hindered phenolic compound (I) contributes especially to improving the stability of polyolefins against heat and oxidation, and hindered piperidine compound (II) contributes especially to improving their stability against light. Additionally, combination of compounds of these two kinds surprisingly gives a polyolefin composition having resistance against discoloration by combustion gas and NOx gas.

In cases where hindered phenolic compound of above formula (I) is combined with commercial oligomeric hindered piperidine compounds other than those of above formula (II), the combination would often be effective for stabilizing polyolefins against heat, oxidation and light and would sometimes be superior, in this respect onlv, to the combination of the present invention.

However, it is general that polyolefins as stabilized by the former combination falling outside the scope of the present invention easily discolor when exposed to combustion gas and NOx gas. In cases where hindered piperidine compound of above formula (II) is combined with commercial hindered phenolic compounds other than those of above formula (I), most results for polyolefins are unsatisfactory as regards all of stability against heat and oxidation, stability against light,and stability against discoloration caused by combustion gas and NOx gas.

The polyolefin composition of the present invention may contain other additive(s), e.g. selected from antioxidants, light stabilizers, metal soaps, nucleating agents, lubricants, antistatic agents, metal deactivators, flame retardants, pigments and fluorescent brighteners, provided that this does not interfere with the characteristics of the composition.

Of usable antioxidants, preferred are phosphorus-containing compounds. Specifically, addition of an organic phosphorous antioxidant gives further improvement of the stability to the polyolefin composition of the present invention. As preferred examples of the organic phosphorous antioxidants usable in the present invention for the purpose, the following are referred to:
Bis(2,4-di-t-butylphenyl) pentaerythritol diphosphite;
Tris(2,4-di-t-butylphenyl) phosphite;
Bis(2,6-di-t-butyl-4-methylphenyl) pentaerythritol diphosphite;
Distearyl pentaerythritol diphosphite; and
Tetrakis(2,4-di-t-butylphenyl) 4,4′-biphenylene diphosphonite.

Where such phosphorus-containing compounds are used as an antioxidant, the content of the compound is preferably 0.01 to 1 part by weight, more preferably 0.02 to 0.5 part by weight, per 100 parts by weight of the polyolefin in the composition.

As a means of incorporating hindered phenolic compound (I) and hindered piperidine compound (II) and optionally other additives in a polyolefin, any and every method which is suitable for forming a homogeneous blend may be employed. The starting materials may be blended simultaneously,or they may be blended separately in plural steps, or they may be blended as a master batch. The materials may be kneaded by any conventional method. For instance, they may well be kneaded with a single-screw extruder or a double-screw extruder.

The polyolefin composition of the present invention is useful in the field of fibers, films and other shaped articles which are desired to be resistant to discoloration, especially in the field of such shaped articles which are often exposed to combustion gas and NOx gas. In particular, it is useful in the field of fibers.

Shaping of the composition may be effected by various known methods. For instance, where the composition is formed into films, any general film extruder-may be used. As the case may be, stretching may be combined with the film extrusion. Where the composition is formed into fibers, it may well be melt-spun by any conventional method. Melt-spinning may also be combined with subsequent stretching, if desired.

The present invention is explained in more detail by way of the following Examples.

### EXAMPLE 1

| | |
|---|---|
| Formulation | |
| Unstabilized Polypropylene | 100 parts by weight |
| Calcium Stearate | 0.05 part by weight |
| Test Additives | See Table 1 |

The above materials were blended by a mixer for 5 minutes and the resulting blend was extruded at 240°C through a 30 mmφ extruder to pelletize. The pellets were subjected to melt-spinning at 280°C in the usual manner to obtain unstretched filaments. The filaments were stretched 3.5 times the length at 130°C to form polypropylene fibers of 6 denier. Twenty of the 6 denier fibers were twisted to make yarn and subjected to testing. The various tests were conducted in the following manners and the results are shown in Table 1.

### (1) Heat Resistance:

The previously prepared twisted yarn was singlewise wound in a width of 2 cm around a 40 x 60 x 2 mm stabilized polypropylene sheet as separately prepared. The thus wound yarn was put in a Geer oven of 140°C, whereupon the time before yarn breakage was measured. On the basis of the time, the stability against heat and oxidation was evaluated.

### (2) Light Resistance:

The previously prepared twisted yarn was singlewise wound in a width of 2 cm around a 40 x 60 x 1 mm paper board. This was put in a carbon arc Fade-O-meter having a black panel temperature of 83°C, whereupon the time before yarn breakage was measured. On the basis of the time, the stability against light was evaluated.

### (3) Resistance to Discoloration by Combustion Gas:

The previously prepared twisted yarn was singlewise wound in a width of 2 cm around a 40 x 60 x 2 mm stabilized polypropylene sheet as separately prepared. The thus wound yarn was exposed to combustion gas of a city gas of 98°C for 30 minutes, whereupon the difference in the yellowness index (hereinafter referred to as "ΔYI") between the non-exposed yarn and the exposed yarn was measured. On the basis of the value, the degree of discoloration of the sample was evaluated. The device as used for combustion gas exposure was a stainless steel cylinder having a diameter of 25 cm and a length of 70 cm, where combustion gas was generated from the bottom and the sample to be tested was put in the upper portion.

### (4) Resistance to Discoloration by NOx gas:

The previously prepared twisted yarn was singlewise wound in a width of 2 cm around a 40 x 60 x 1 mm paper board, and the thus wound yarn was used as a sample. The sample was exposed to an atmosphere having an NOx concentration of 2 % by volume for 24 hours, in accordance with JIS L 0855 "Testing Method for Colour Fastness to Nitrogen Oxides", whereupon "ΔYI" before and after exposure was measured. On the basis of the value obtained, the degree of discoloration of the sample was evaluated.

Symbols for test additives shown in Table 1 indicate the following compounds :
- A-1:: 3,9-Bis[2-{3-(3-t-butyl-4-hydroxy-5-methylphenyl)propionyloxy)-1,1-dimethyethyl]-2,4,8,10-tetraoxaspiro[5.5]undecane
- A-2:: Tetrakis[3-(3,5-di-t-butyl-4-hydroxyphenyl)propionyloxymethyl]methane
- A-3:: 1,3,5-Tris(4-t-butyl-3-hydroxy-2,6-dimethylbenzyl) isocyanurate
- A-4:: 2,4-Bis(n-octylthio)-6-(4-hydroxy-3,5-di-t-butylanilino)-1,3,5-triazine
- A-5:: 1,3,5-Tris(3,5-di-t-butyl-4-hydroxybenzyl) isocyanurate
- B-1:: Polycondensate of dimethyl succinate with 1-(2-hydroxyethyl)-4-hydroxy-2,2,6,6-tetramethylpiperidine (Tinuvin 622 LD, product by Ciba-Geigy)
- B-2:: Poly[{6-(1,1,3,3-tetramethylbutyl)imino-1,3,5-triazine-2,4-diyl}{(2,2,6,6-tetramethy1-4-piperidyl)imino}hexamethylene{(2,2,6,6-tetramethyl-4-piperidyl)imino}] (Chimassorb 944 LD, product by Ciba-Geigy)
- B-3:: Poly[(6-morpholino-s-triazine-2,4-diyl){(2,2,6,6-tetramethyl-4-piperidyl)imino}hexamethylene{(2,2,6,6-tetramethyl-4-piperidyl)imino}] (product by American Cyanamid)
- C-1:: Tris(2,4-di-t-butylphenyl) phosphite
- C-2:: Bis(2,4-di-t-butylphenyl) pentaerythritol diphosphite
- C-3:: Tetrakis(2,4-di-t-butylphenyl) 4,4'-biphenylene diphosphonite

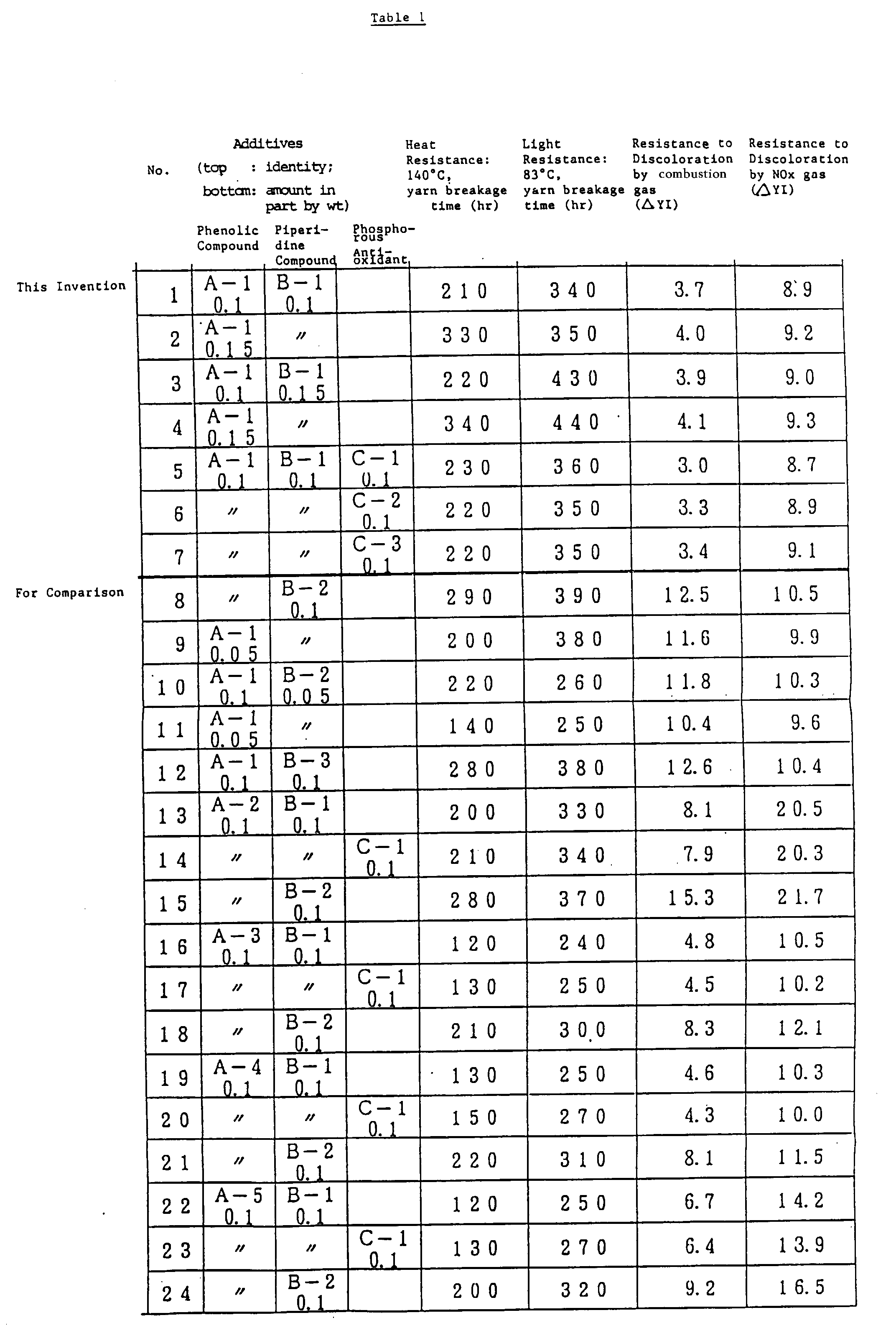

In accordance with the present invention, there is provided a polyolefin composition which has sufficient stability against heat, oxidation and light for practical use and which additionally has resistance also to discoloration by combustion gas and NOx gas.

## Claims

1. A polyolefin composition in the form of fibre or film containing a stabilizer of
(A) hindered phenolic compound selected from those of formula (I): 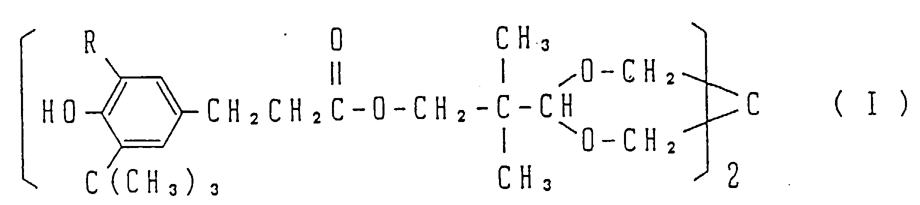 wherein R is a hydrogen atom or C₁-C₃ alkyl group, and
(B) hindered piperidine compound selected from those of formula (II): 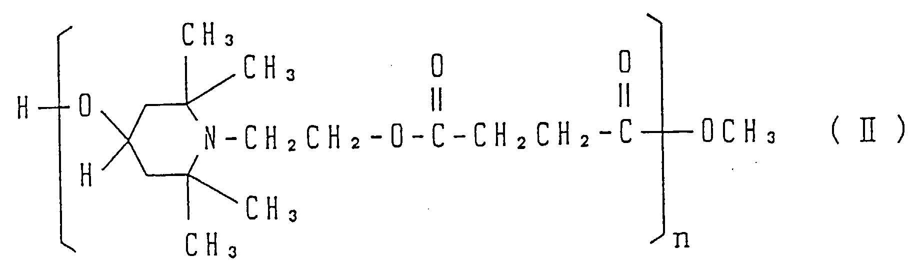 wherein n is 2 to 20.

2. A composition according to claim 1 wherein the polyolefin is selected from polyethylene, polypropylene, polybutene-1, polyisobutene, poly-3-methylbutene-1, polyhexene-1, poly-4-methylpentene-1, ethylene/propylene copolymer, ethylene/butene-1 copolymer, ethylene/4-methylpentene-1 copolymer, propylene/butene-1 copolymer, propylene/4-methylpentene-1 copolymer and ethylene/propylene/butene-1 copolymer.

3. A composition according to claim 1 or 2 wherein the hindered phenolic compound comprises 3,9-bis[2-{3-(3-t-butyl-4-hydroxy-5-methylphenyl)propionyloxy}-1,1-dimethylethyl]-2,4,8, 10-tetraoxaspiro[5.5]undecane.

4. A composition according to any preceding claim wherein (A) and (B) are each present in an amount of 0.01 to 1 part by weight per 100 parts by weight of polyolefin.

5. A composition according to claim 4 wherein (A) and (B) are each present in an amount of 0.02 to 0.5 part by weight per 100 parts by weight of polyolefin.

6. A composition according to any preceding claim which also contains organic phosphorous antioxidant.

7. A composition according to claim 6 containing from 0.01 to 1 part by weight of said antioxidant per 100 parts by weight of the polyolefin.

8. A composition according to claim 7 containing from 0.02 to 0.5 part by weight of said antioxidant per 100 parts by weight of the polyolefin.

9. A composition according to claim 6, 7 or 8 wherein said antioxidant is selected from bis(2,4-di-t-butylphenyl) pentaerythritol diphosphite, tris(2,4-di-t-butylphenyl) phosphite,bis(2,6-di-t-butyl-4-methylphenyl)pentaerythritol diphosphite, distearyl pentaerythritol diphosphite and tetrakis(2,4-di-t-butylphenyl) 4,4'-biphenylene diphosphonite.

10. A composition according to any preceding claim which is in the form of fibre.

11. A method for producing a polyolefin formed product in the form of fibre or film by blending polyolefin with
(A) hindered phenolic compound selected from those of formula (I): 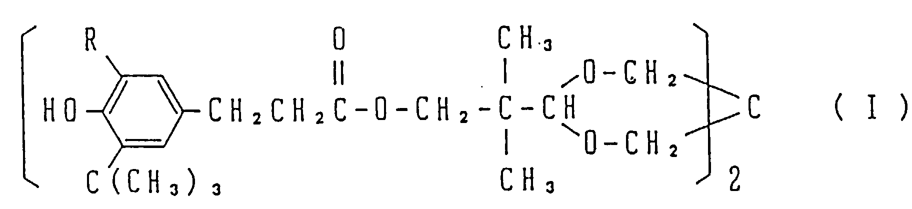 wherein R is a hydrogen atom or a C₁-C₃ alkyl group, and
(B) hindered piperidine compound selected from those of formula (II): 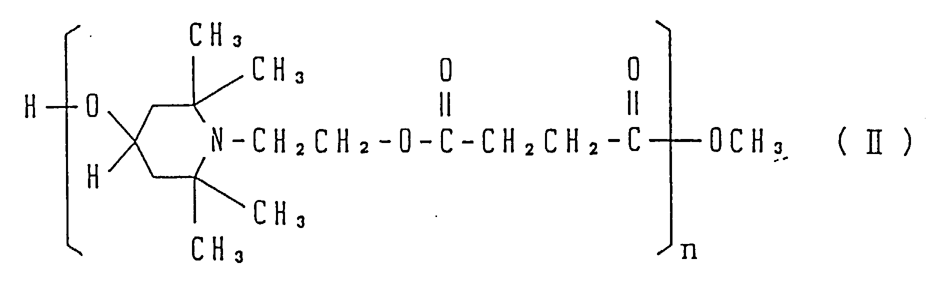 wherein n is 2 to 20, and, optionally,
(C) organic phosphorous antioxidant, and forming the blen into a fibre or film, whereby the formed fibre or film is stabilized against heat, oxidation and light as well as against combustion gas and nitrogen oxide gas.

12. A method according to claim 11 wherein said forming comprises spinning and stretching to obtain fibre.

## Patentansprüche

1. Eine Polyolefinzusammensetzung in Form von Faser oder Film, enthaltend einen Stabilisator aus
(A) gehinderter phenolischer Verbindung ausgewählt aus denen der Formel (I): 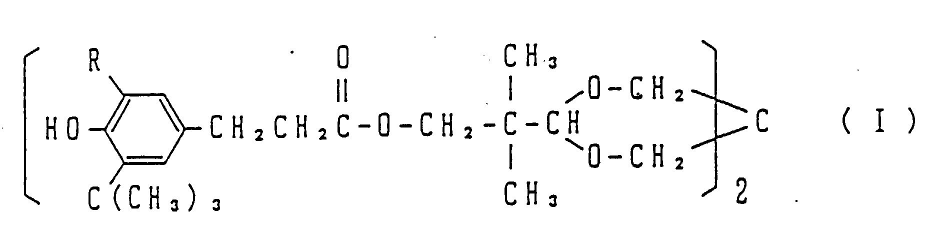 worin R ein Wasserstoffatom oder eine C₁-C₃-Alkylgruppe ist, und
(B) gehinderter Piperidinverbindung ausgewählt aus denen der Formel (II): 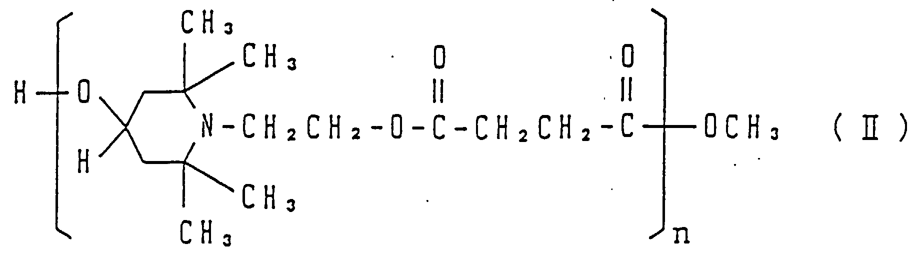 worin n 2 bis 20 ist.

2. Zusammensetzung nach Anspruch 1, dadurch gekennzeichnet, daß das Polyolefin ausgewählt ist aus Polyethylen, Polypropylen, Polybuten-1, Polyisobuten, Poly-3-methylbuten-1, Polyhexen-1, Poly-4-methylpenten-1, Ethylen/Propylencopolymer, Ethylen/Buten-1-copolymer, Ethylen/4-Methylpenten-1-copolymer, Propylen/Buten-1-copolymer, Propylen/4-Methylpenten-1-copolymer und Ethylen/Propylen/Buten-1 copolymer.

3. Zusammensetzung nach Anspruch 1 oder 2, dadurch gekennzeichnet, daß die gehinderte Phenolverbindung 3,9-Bis-[2-{3-(3-t-butyl-4-hydroxy-5-methyiphenyl)-propionyloxy}-1,1-dimethylethyl]-2,4,8,10-tetraoxaspiro-[5,5]-undecan umfaßt.

4. Zusammensetzung nach irgendeinem der vorhergehenden Ansprüche, dadurch gekennzeichnet, daß (A) und (B) jeweils in einer Menge von 0,01 bis 1 Gewichtsteilen pro 100 Gewichtsteile Polyolefin vorliegen.

5. Zusammensetzung nach Anspruch 4, dadurch gekennzeichnet, daß (A) und (B) jeweils in einer Menge von 0,02 bis 0,5 Gewichtsteilen pro 100 Gewichtsteile Polyolefin vorliegen.

6. Zusammensetzung nach irgendeinem der vorhergehenden Ansprüche, dadurch gekennzeichnet, daß sie auch phosphorigorganisches Antioxidans enthält.

7. Zusammensetzung nach Anspruch 6, dadurch gekennzeichnet, daß sie 0,01 bis 1 Gewichtsteile dieses Antioxidans pro 100 Gewichtsteile Polyolefin enthält.

8. Zusammensetzung nach Anspruch 7, dadurch gekennzeichnet, daß sie 0,02 bis 0,5 Gewichtsteile Antioxidans pro 100 Gewichtsteile Polyolefin enthält.

9. Zusammensetzung nach Anspruch 6, 7 oder 8, dadurch gekennzeichnet, daß das Antioxidans ausgewählt ist aus Bis-(2,4-di-t-butylphenyl)-pentaerythritdiphosphit,Tris-(2,4-di-t-butylphenyl)-phosphit,Bis-(2,6-di-t-butyl-4-methylphenyl)-pentaerythritdiphosphit, DistearylpentaerythritdiphosphitundTetrakis-(2,4-di-t-butylphenyl)-4,4'-biphenylendiphosphonit.

10. Zusammensetzung nach irgendeinem der vorhergehenden Ansprüche, dadurch gekennzeichnet, daß sie in Form von Faser vorliegt.

11. Verfahren zur Herstellung eines geformten Polyolefinprodukts in Form von Faser oder Film durch Mischen von Polyolefin mit
(A) gehinderter phenolischer Verbindung ausgewählt aus denen der Formel (I): 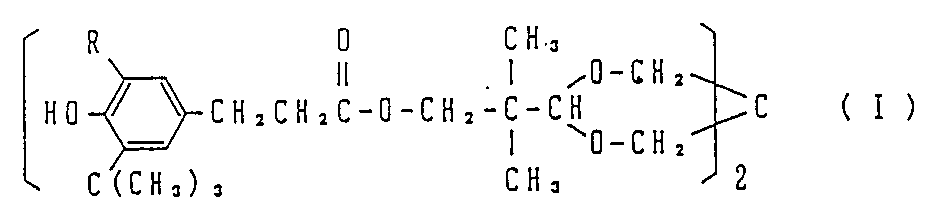 worin R ein Wasserstoffatom oder eine C₁-C₃-Alkylgruppe ist, und
(B) gehinderter Piperidinverbindung ausgewählt aus denen der Formel (II): 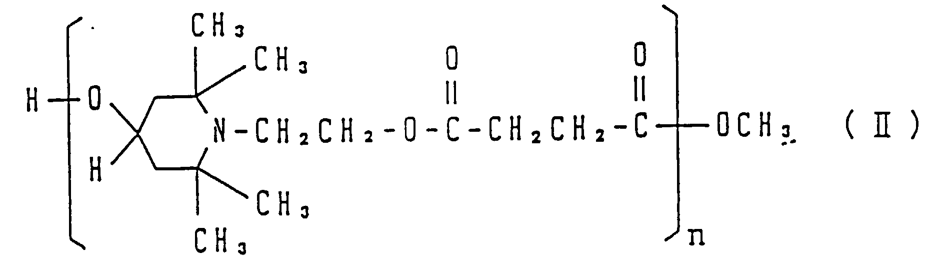 worin n 2 bis 20 ist, und gegebenenfalls
(C) phosphorigorganischem Antioxidans,
und Formen der Mischung zu einer Faser oder einem Film, wodurch die geformte Faser oder der geformte Film gegen Hitze, Oxidation und Licht sowie gegen Verbrennungsgas und Stickoxidgas stabilisiert wird.

12. Verfahren nach Anspruch 11, dadurch gekennzeichnet, daß die Formung das Spinnen und Verstrecken zur Erzielung einer Faser umfaßt.

## Revendications

1. Composition de polyoléfine sous forme de fibre ou de film, contenant un stabilisant constitué
(A) d'un composé phénolique à encombrement stérique, choisi entre des composés de formule (I) : 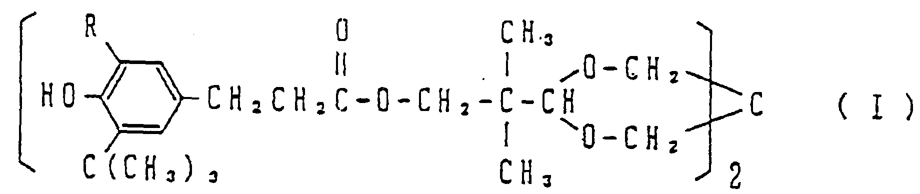 dans laquelle R représente un groupe alkyle en C₁ à C₃, et
(B) d'un dérivé de pipéridine à encombrement stérique choisi entre les composés de formule (II) : 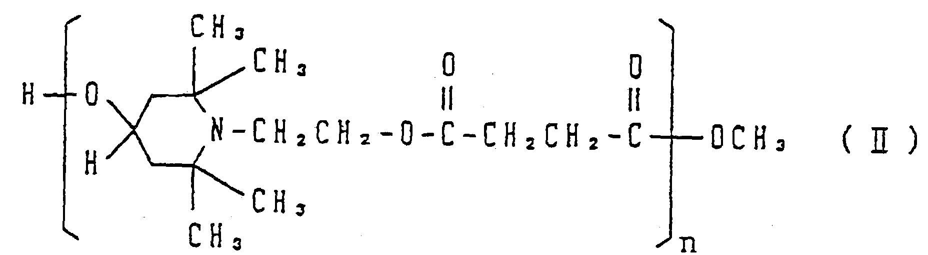 dans laquelle n a une valeur de 2 à 20.

2. Composition suivant la revendication 1, dans laquelle la polyoléfine est choisie entre le polyéthylène, le polypropylène, le polybutène-1, le polyisobutène, le poly-3-méthylbutène-1, le polyhexène-1, le poly-4-méthylpentène-1, un copolymère éthylène/propylène, un copolymère éthylène-butane-1, un copolymère éthylène/4-méthylpentène-1, un copolymère propylène/butène-1, un copolymère propylène/4-méthylpentène-1 et un copolymère éthylène/propylène/butène-1.

3. Composition suivant la revendication 1 ou 2, dans laquelle le composé phénolique à encombrement stérique consiste en 3,9-bis[2-{3-(3-t-butyl-4-hydroxy-5-méthylphényl)propionyloxy}-1,1-diméthyléthyl]-2,4,8,10-tétraoxaspiro[5.5]undécane.

4. Composition suivant l'une quelconque des revendications précédentes, dans laquelle les constituants (A) et (B) sont chacun présents en une quantité de 0,01 à 1 partie en poids pour 100 parties en poids de polyoléfine.

5. Composition suivant la revendication 4, dans laquelle les constituants (A) et (B) sont chacun présents en une quantité de 0,02 à 0,5 partie en poids pour 100 parties en poids de polyoléfine.

6. Composition suivant l'une quelconque des revendications précédentes, qui contient également un anti-oxydant organique renfermant du phosphore.

7. Composition suivant la revendication 6, contenant 0,01 à 1 partie en poids de l'anti-oxydant pour 100 parties en poids de la polyoléfine.

8. Composition suivant la revendication 7, contenant 0,02 à 0,5 partie en poids de l'anti-oxydant pour 100 parties en poids de la polyoléfine.

9. Composition suivant la revendication 6, 7 ou 8, dans laquelle l'anti-oxydant est choisi entre le diphosphite de bis(2,4-di-tertio-butylphényl)pentaérythritol, le phosphite de tris(2,4-di-tertio-butylphényle), le diphosphite de bis(2,6-di-tertio-butyl-4-méthylphényl)pentaérythritol, le diphosphite de distéarylpentaérythritol et le diphosphonice de tétrakis(2,4-di-tertio-butylphényl)4,4'-biphénylène.

10. Composition suivant l'une quelconque des revendications précédentes, qui est sous forme de fibre.

11. Procédé de préparation d'un produit formé d'une polyoléfine, sous forme de fibre ou de film, en mélangeant la polyoléfine à
(A) un composé phénolique à encombrement stérique, choisi entre les composés de formule (I) : 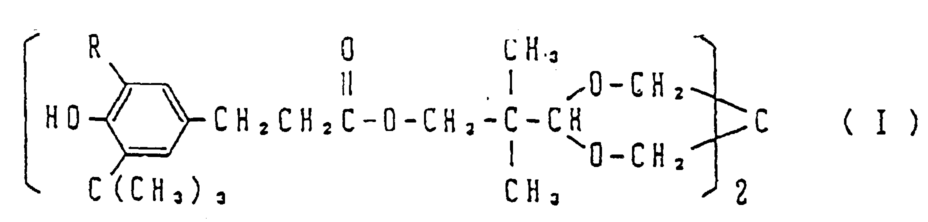 dans laquelle R représente un atome d'hydrogène ou un groupe alkyle en C₁ à C₃, et
(B) un dérivé de pipéridine à encombrement stérique, choisi entre les composés de formule (II) : 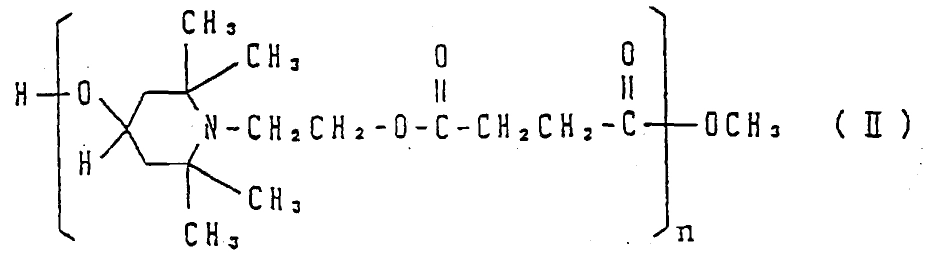 dans laquelle n a une valeur de 2 à 20, et, facultativement,
(C) un antioxydant organique renfermant du phosphore, et transformation du mélange en une fibre ou un film, la fibre ou le film formé étant ainsi stabilisé vis-à-vis de la chaleur, de l'oxydation et la lumière et également vis-à-vis d'un gaz de combustion et d'oxydes d'azote gazeux.

12. Procédé suivant la revendication 11, dans lequel la transformation comprend un filage et un étirage pour obtenir une fibre.
